# EUROPÄISCHE PATENTSCHRIFT

(11) **EP 2 022 125 B1**
(45) Veröffentlichungstag und Bekanntmachung des Hinweises auf die Patenterteilung: **02.09.2009**
(21) Anmeldenummer: 07722389.9
(22) Anmeldetag: 09.05.2007
(51) Int. Cl.: H01M 10/42

(54) **FLÜSSIGELEKTROLYTBATTERIE MIT DYNAMISCHER DURCHMISCHUNG UND ÜBERHITZUNGSSCHUTZ**
LIQUID ELECTROLYTE BATTERY HAVING DYNAMIC MIXING AND OVERHEATING PROTECTION
BATTERIE À ÉLECTROLYTE LIQUIDE À MÉLANGE DYNAMIQUE ET PROTECTION CONTRE LA SURCHAUFFE

(30) Priorität: 09.05.2006 DE 102006021583
(43) Veröffentlichungstag der Anmeldung: 11.02.2009
(73) Patentinhaber: IQ Power Licensing AG, 6300 Zug (CH)
(72) Erfinder: BAUER, C., Günther, 85521 Ottobrunn (DE)
(74) Vertreter: Müller & Schubert
(86) Internationale Anmeldenummer: PCT/DE2007/000837
(87) Internationale Veröffentlichungsnummer: WO 2007/128296

(56) Entgegenhaltungen:
- WO-A-95/15586
- JP-A- 2 079 365
- US-A1- 2003 148 170

## Beschreibung

Die Erfindung betrifft eine Flüssigelektrolytbatterie, wie z. B. eine Blei-Säure-Batterie, die z. B. als Starterbatterie in Fahrzeugen eingesetzt wird.

Das Bestreben der Fahrzeugindustrie nach Leichtbauweise betrifft auch die Einsparung von Batteriegewicht. Gleichzeitig steigt jedoch die Anforderung nach höherer Batterieleistung, da neben der herkömmlichen Energie zum Starten z. B. eines PKW auch Energie für zusätzliche Aggregate wie elektrische Fensterheber, Stellmotore zum Verstellen der Sitze oder auch zum elektrischen Beheizen der Sitze benötigt wird. Ferner ist es wünschenswert, die Batterieleistung über die Lebensdauer der Batterie möglichst auf einem konstanten hohen Niveau zu halten, da zunehmend auch sicherheitsrelevante Funktionseinheiten wie Lenkung und Bremsen elektrisch gesteuert und betätigt werden. Unter Batterieleistung wird nachfolgend die Kapazität der Batterie sowie die Fähigkeit der Batterie zur Stromabgabe bzw. zur Stromaufnahme verstanden. Die Batterieleistung wird von verschiedenen, dem Fachmann bekannten Faktoren beeinflußt.

Aus dem Stand der Technik sind verschiedene Maßnahmen bekannt, um die Leistung einer Flüssigelektrolytbatterie, wie z. B. einer Blei-Säure-Batterie zu erhöhen. Ein besonderes Problem bei diesen Batterien ist, daß die Batterieleistung eine starke Abhängigkeit von der Batterietemperatur aufweist. In einem zulässigen Betriebsbereich ist mit einem Kapazitätsrückgang von ca. 0,6 bis 0,8 % pro Grad Celsius oder mehr zu rechnen. Wird angenommen, daß eine optimale Betriebstemperatur bei ca. 30 Grad Celsius liegt und die Batterie bei minus 20 Grad Celsius betrieben wird, um z. B. den Anlasser eines Fahrzeugs zu betätigen, dann würde diese Batterie nur noch ca. 60 % ihrer Kapazität aufweisen. Es ist jedoch dem Fachmann bekannt, daß weitere Einflußfaktoren die Kapazität der Batterie verringern. Ein wesentlicher Einflußfaktor ist die sogenannte Stratifikation der Säure, d. h. die Säurekonzentration ist bezüglich der Elektrodenfläche nicht gleichmäßig.
Das bewirkt, daß die Elektroden an Stellen, an denen die Säurekonzentration zu hoch ist, korrodieren, so daß sich die Lebensdauer der Batterie vermindert, und an den Elektrodenstellen, an denen die Säurekonzentration zu gering ist, erreicht die Batterie nicht ihre volle Leistung.

Es ist allgemein bekannt, daß Fahrzeuge mit einer Brennkraftmaschine, die längere Zeit, z. B. mehr als 8 Stunden, bei Temperaturen unter Null Grad Celsius gestanden haben, sich besser starten lassen, wenn die ausgekühlte Batterie vor dem Start angewärmt wurde.

Daher sind eine Vielzahl von Batterieheizeinrichtungen entwickelt worden, die verschiedene Vor- und Nachteile aufweisen und z. B. in den Dokumenten DE 28 12 876, US 2,440,369, DE 1 496 134, DE 40 27 149 A1 oder DE 100 14 848 beschrieben wurden.

Die Batterieheizvorrichtungen können nach verschieden Gesichtspunkten klassifiziert werden.

Eine Gruppe betrifft die Heizung der Batterie durch Wärmeaustausch. So wurde z. B. vorgeschlagen, an der Außenwand einer Batterie Wärmetauscherrohre vorzusehen, durch die warme Motorkühlflüssigkeit geleitet wird.

Vielfach wurden auch elektrische Heizungen vorgeschlagen, wobei diese Gruppe in zwei Untergruppen geteilt werden kann.

Es gibt eine Reihe von Ideen, Heizfolien oder ähnliche Heizelemente an der Außenwand oder auch in der Batterie selbst anzuordnen und die elektrische Energie extern zuzuführen, z. B. bei einem in einer Garage parkenden Fahrzeug aus einem 220 V Netzanschluß. Hier steht immer genügend Energie zur Verfügung, so daß die Batterie unabhängig von der Außentemperatur auf einer vorbestimmten Temperatur gehalten werden kann. Ebenso ist es möglich, die Energie aus der Lichtmaschine zu entnehmen, wenn das Fahrzeug fährt.

Bei der zweiten Untergruppe wird die Energie zur Beheizung der Batterie aus dieser selbst entnommen. Das ist dann erforderlich, wenn das Fahrzeug auf der Straße abgestellt ist und keine Möglichkeit besteht, elektrische Energie von außen zuzuführen. Es wurde bereits vorgeschlagen, die Batterie thermisch gut zu isolieren und mittels der Selbstheizung auf einem möglichst optimalen Temperaturniveau zu halten. Diese Methode ist nur sinnvoll, wenn das Fahrzeug lediglich ca. 8 bis 15 Stunden steht und auskühlt und danach das Fahrzeug wieder benutzt wird, d. h. die thermische Isolation der Batterie muß so gut sein, daß die Batterie in diesen ca. 8 bis 15 Stunden durch die Selbstheizung auf dem gewünschten Temperaturniveau gehalten werden kann.

Wenn das Fahrzeug jedoch mehrere Tage steht, reicht der Energiegehalt der Batterie nicht aus, um selbst eine gut isolierte Batterie auf der wünschenswerten Temperatur zu halten. Es ist für solche Fälle notwendig, die Batterie erst dann zu erwärmen, wenn ein Start des Fahrzeugs vorgesehen ist.

Es wurde daher mehrfach vorgeschlagen, die kalte Batterie erst kurz vor dem Start des Fahrzeugs zu erwärmen. Eine von mehreren Möglichkeiten, eine Batterie schnell zu erwärmen, ist ein Wärmeeintrag am Batterieboden.

Es wurde daher in der DE 100 14 848 C2 vorgeschlagen, die Batterie auf eine Wärmeplatte zu stellen, wobei es in diesem Zusammenhang unerheblich ist, ob es sich um eine herkömmliche elektrisch beheizbare Wärmeplatte handelt oder - wie bei der DE 100 14 848 C2 - um eine Abwärme erzeugende elektronische Baugruppe, die eigentlich für andere Zwecke eingesetzt wird.

Eine Starterbatterie hat wie jeder materielle Körper eine vorbestimmte Wärmekapazität. Um eine kalte Batterie auf ein vorbestimmtes Temperaturniveau anzuheben, muß eine vorbestimmte Wärmeenergie eingebracht werden. Es ist wünschenswert, daß die Batterie in möglichst kürzester Zeit erwärmt werden kann. Das ist nur möglich, wenn die Wärmeplatte entsprechend stark beheizt wird.

Da sich jedoch die Wärme auf Grund der schlechten Wärmeleitung der Säure nur relativ langsam verteilt, d. h. ein Temperaturausgleich nur langsam erfolgt, kann es an den Stellen, wo die Wärmeenergie eingetragen wird, zu Elektrodenschäden kommen. Dem Fachmann ist bekannt, daß eine Blei-Säure-Batterie bereits bei kurzzeitiger Überhitzung, z. B. bei über 50 Grad Celsius irreversibel geschädigt werden kann.

Daher steht der Forderung nach einer schnellen Erwärmung der Batterie die Forderung gegenüber, daß die Batterie möglichst schonend, d. h. langsam erwärmt werden sollte, damit sie nicht geschädigt wird. Die Lösung dieses technischen Widerspruchs bildet die Aufgabe der Erfindung.

Diese Aufgabe wurde mit einer Flüssigelektrolytbatterie nach Anspruch 1 gelöst.

Diese Batterie weist eine dynamische Elektrolytdurchmischung mit einem Überhitzungsschutz auf. In einem Gehäuse mit einem Gehäuseboden sind Elektroden senkrecht angeordnet. Das Gehäuse ist mit einem Flüssigelektrolyten gefüllt. Am Gehäuseboden ist eine elektrische Heizschiene angeordnet. Diese Heizschiene ist so ausgebildet, daß der erwärmbare Bereich des Gehäusebodens höchstens 60 % der Fläche des Gehäusebodens beträgt, und daß sich die Heizschiene rechtwinklig und mittig zu den Elektrodenplatten erstreckt, was im Ausführungsbeispiel noch näher erläutert wird.

Weiterhin ist eine Durchmischungsvorrichtung mit einem Überhitzungsschutz mit nachfolgenden Merkmalen vorgesehen:
Zwischen dem Gehäuseboden und der Unterkante der Elektroden ist entlang der Heizschiene und mittig dazu eine Hitzeschutzplatte angeordnet. Die Fläche der Hitzeschutzplatte ist wenigstens 20 % größer als die Fläche der Heizschiene, die mit dem Gehäuseboden der Batterie in Berührungskontakt ist.
Zwischen den senkrechten Gehäusewänden und den Seitenkanten der Elektroden sind zwei Platten angeordnet, deren oberer Bereich als Schöpftrichter ausgebildet ist, wobei unter Schöpftrichter eine Volumenerweiterung des oberen Endabschnitts des Strömungskanals zu verstehen ist, der zwischen der senkrechten Gehäusewand und der Platte ausgebildet ist. Die Oberkante des Schöpftrichters ragt einige Millimeter über dem Elektrolytpe-gel hinaus, so daß bei einer fahrzeugtypischen Bewegung der Batterie der Elektrolyt in die Schöpftrichter hinein schwappt.

Da der Pegelstand in dem Strömungskanal nun höher ist als der Pegelstand des Elektrolyten außerhalb des Strömungskanals, gleichen sich beide Pegelstände nach dem Prinzip der verbundenen Gefäße wieder an, in dem der Elektrolyt unten aus dem Strömungskanal ausfließt. Das ist deshalb möglich, da zwischen der waagerechten Hitzeschutzplatte und den unteren Endabschnitten der zwei senkrechten Platten auf jeder Seite ein Zwischenraum ist.

Wenn die Heizschiene einen Teilabschnitt des Gehäusebodens der Batterie erwärmt, wird durch die Wärmeleitung auch der darüber liegende Elektrolyt erwärmt und hat die Tendenz, aufwärts zu strömen, wobei diese Strömung um so stärker ist, je größer der Temperaturunterschied zwischen dem erwärmten Elektrolyt an der Heizschiene und dem kalten Elektrolyt ist.
Wenn die Batterie nicht bewegt wird, d. h. wenn z. B. das Fahrzeug nicht fährt, ist die dynamische Elektrolytdurchmischung nicht aktiv, d. h. es schwappt kein Elektrolyt in den Schöpftrichter. Daher darf die Heizschiene nur eine vorbestimmte niedrigere Temperatur aufweisen, da sonst zu heißer Elektrolyt an die Unterseite der Elektrodenplatten strömt und diese möglicherweise schädigt.
Wenn jedoch das Fahrzeug fährt und fahrzeugtypische Brems- und Beschleunigungsbewegungen auftreten, erfolgt zusätzlich die dynamische Durchmischung des Elektrolyten. In diesem Fall kann die Heizschiene eine höhere Temperatur aufweisen, weil durch die dynamische Durchmischung ein schneller Abbau von Temperaturspitzen bewirkt wird. Insofern kann die Batterie in zwei Betriebsarten betrieben werden.

Mit der Erfindung werden zwei wesentliche Vorteile erreicht:
Der Elektrolyt kann insbesondere während der Fahrt stärker erhitzt werden, ohne daß dadurch die wärmeempfindlichen Elektrodenplatten geschädigt werden. Das wird deshalb vermieden, weil der heiße Elektrolyt von den Elektroden abgeschirmt und schnell mit dem nach unten nachfließenden kälteren Elektrolyt vermischt wird. Somit kann die Batterie schnell erwärmt werden. Dadurch werden nicht nur schädliche Temperaturgradienten verhindert, sondern auch die unerwünschte Schichtung des Elektrolyten, die besonders von Blei-Säure-Batterien bekannt ist.

Nach Anspruch 2 weist die Hitzeschutzplatte Löcher auf. Der Fachmann kann durch die Wahl der geometrischen Parameter, wie z. B. der Lochgröße, der Anordnung der Löcher und unter Berücksichtigung der vorgesehenen Heizleistung ein Optimum für eine schnelle Durchwärmung der Batterie finden - ohne daß dabei die Batterie thermisch geschädigt wird. Dazu ist es lediglich erforderlich, z. B. mittels Thermoelemente das Temperaturprofil über dem Überhitzungsschutz zu ermitteln und die Löcher so auszubilden und anzuordnen, daß an keiner Stelle innerhalb der Batterie und unter keinen Umständen die Säure bzw. der Elektrolyt so heiß wird, daß die Elektroden geschädigt werden könnten.

Es ist klar, daß die Erfindung auf jede Art von Batterie mit einem flüssigen Elektrolyten angewendet werden kann, wenn bei der bodenseitigen Erwärmung dieser Batterie die Gefahr einer thermischen Schädigung der Elektroden durch Kontakt mit zu heißem Elektrolyten besteht.

Weitere Maßnahmen und Vorteile der Erfindung ergeben sich aus der nachfolgenden Beschreibung der Ausführungsbeispiele in Verbindung mit den beigefügten schematischen Zeichnungen.
- Fig. 1: zeigt eine seitliche Schnittansicht einer ersten Ausführungsform der Erfindung.
- Fig. 2: zeigt eine seitliche Schnittansicht einer zweiten Ausführungsform der Erfindung.
- Fig. 3: zeigt einen leeren Batteriekasten nach dem Stand der Technik.
Technik.

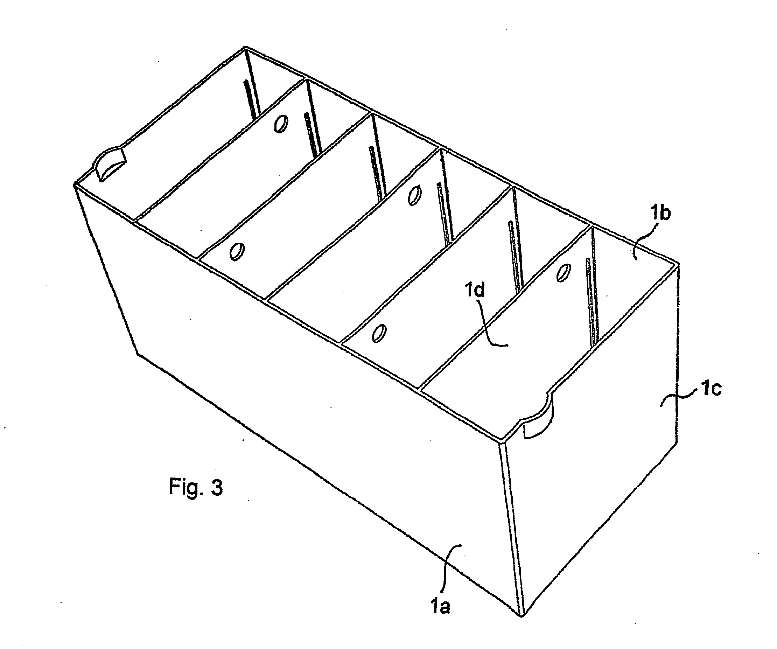

Die nachfolgende Erläuterung der Erfindung beginnt mit dem Stand der Technik nach Fig. 3, da dadurch die Erfindung leichter verständlich wird.

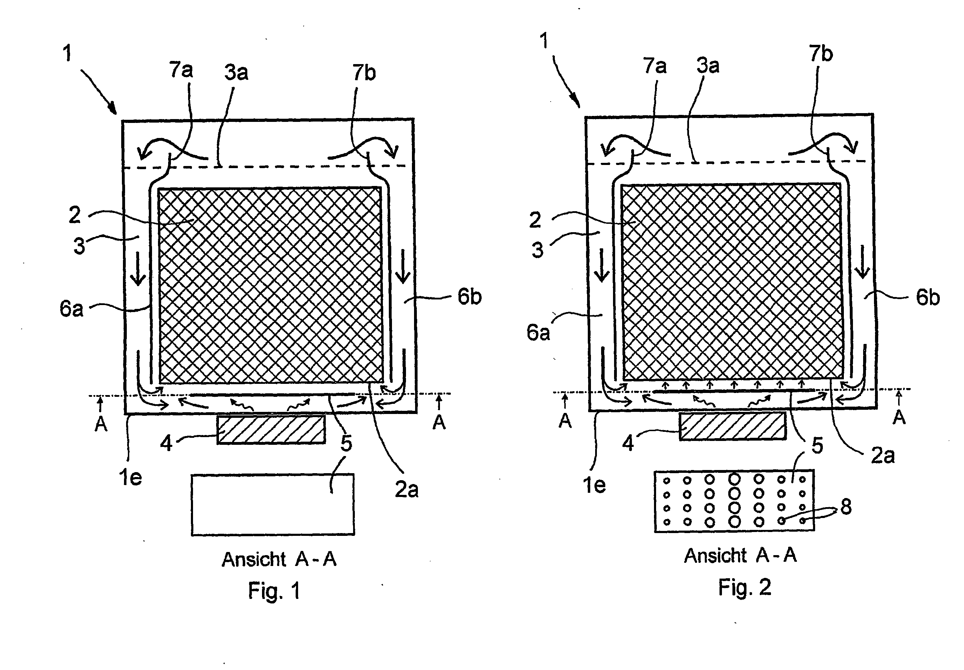

Die Fig. 3 zeigt einen Batteriekasten mit 6 Zellen. Wenn dieser Batteriekasten mit seiner Grundfläche auf zwei Heizschienen steht, wird jede der Zellen randseitig am Boden erwärmt. Alle nachfolgenden Erläuterungen beziehen sich jedoch nur auf eine einzige Zelle, wobei diese Zelle in Fig. 1 und 2 von der Richtung aus dargestellt ist, die in Fig. 3 mit dem Bezugszeichen 1 c bezeichnet ist. Da diese Zelle auch eine auch eigenständige Batterie ist, wird nachfolgend nur noch von einer Batterie gesprochen.

Die Fig. 1 zeigt eine Batterie mit einem Gehäuse 1, das mit einem Flüssigelektrolyt 3 gefüllt ist, und in welchem senkrecht stehende Elektroden 2 angeordnet sind. Unter der Batterie ist eine elektrisch erwärmbare Heizschiene 4 in Berührungskontakt mit dem Gehäuseboden. Die erwärmbare Fläche des Gehäusebodens ist näherungsweise identisch mit der Fläche der Heizschiene 4. In diesem Beispiel beträgt die Fläche der Heizschiene ca. 1/3 der Fläche des Bodens des Batteriegehäuses. Unterhalb der unteren Elektrodenkanten ist eine Hitzeschutzplatte 5 angeordnet. Die Fläche der Hitzeschutzplatte 5 ist 25 % größer als die Kontaktfläche der Heizschiene 4 am Gehäuseboden 1e der Batterie.

Zwischen den senkrechten Gehäusewänden und den Seitenkanten der Elektroden sind zwei Platten 6a, 6b angeordnet, deren oberer Bereich als Schöpftrichter 7a, 7b ausgebildet ist. Die Oberkante des Schöpftrichters 7a, 7b ragt einige Millimeter über dem Elektrolytpegel 3a hinaus, so daß bei einer fahrzeugtypischen Bewegung der Batterie der Elektrolyt 3 jeweils in einen der Schöpftrichter 6a, 6b schwappt und nach unten sinkt.

Wenn die Batterie erwärmt werden soll, wird die Heizschiene 4 elektrisch beheizt. Die Energie für die Heizschiene 4 kann aus der Batterie selbst entnommen werden oder aus einer externen Energiequelle. Es erwärmt sich durch die Wärmeleitung zuerst die Elektrolytschicht zwischen der Hitzeschutzplatte 5 und dem Abschnitt des Gehäusebodens, der mittels der Heizschiene 4 erwärmt wird. Die Heizschiene 4 ist in dieser Ausführungsform temperaturgeregelt, so daß eine vorbestimmte Höchsttemperatur nicht überschritten wird.

Der erwärmte Elektrolyt kann nicht direkt aufwärts strömen, sondern muß seitlich strömen. Dabei wird jedoch auch die Elektrolytschicht über der Hitzeschutzplatte 4 leicht erwärmt. Wenn die dynamische Mischung aktiv ist, schwappt kalte Säure wechselweise in die Schöpftrichter 7a und 7b, sinkt nach unten, tritt aus dem Strömungskanal aus und mischt sich mit der entgegenströmenden warmen Säure. Die eingezeichneten Strömungspfeile veranschaulichen die Strömungsrichtungen der Säure.

Die Fig. 2 zeigt eine modifizierte Ausführungsform der Erfindung. In der Hitzeschutzplatte 5 sind Löcher 8 vorgesehen. Die Lochgröße beträgt für die kleinen Löcher 1 mm und die größten Löcher 3 mm. Die Größe und die Verteilung der Löcher 8 wird durch wenige Versuche ermittelt, so daß einerseits eine gute Durchmischung der Säure 3 erzielt und andererseits eine Überhitzung der Elektroden 2 vermieden wird.

Diese Ausführungsform ist die beste Ausführungsform der Erfindung. An Hand der beschriebenen Ausführungsformen kann der Fachmann die technische Lehre der vorliegenden Erfindung vollständig entnehmen. Es ist klar, daß diese Ausführungsformen durch einen Fachmann mit Hilfe der erfindungsgemäßen Lehre weiterentwickelt und modifiziert oder kombiniert werden können. Daher fallen auch diese, nicht explizit genannten oder gezeigten weiteren Ausführungsformen in den Schutzbereich der nachfolgenden Patentansprüche.

## Patentansprüche

1. Flüssigelektrolytbatterie mit dynamischer Durchmischung und Überhitzungsschutz, die aufweist:
- ein Gehäuse **(1)** mit einem Gehäuseboden **(1e),**
- Elektroden **(2),** die in dem Gehäuse **(1)** senkrecht angeordnet sind,
- einen Flüssigelektrolyt **(3)** und
- eine Heizung **(4),** die am Gehäuseboden **(1e)** angeordnet ist,
**dadurch gekennzeichnet, daß**
- die Heizung **(4)** so ausgebildet ist, daß
- der erwärmbare Bereich des Gehäusebodens **(1e)** höchstens 60 % der Fläche des Gehäusebodens **(1e)** beträgt und daß
- der erwärmbare Bereich des Gehäusebodens **(1e)** sich rechtwinklig und mittig über alle Elektrodenplatten **(2)** erstreckt,
- eine Durchmischungsvorrichtung mit einem Überhitzungsschutz mit nachfolgenden Merkmalen in dem Batteriegehäuse angeordnet ist:
- zwischen dem Gehäuseboden **(1e)** und der Unterkante **(2a)** der Elektroden **(2)** ist eine Hitzeschutzplatte **(5)** angeordnet, wobei die Fläche der Hitzeschutzplatte **(5)** wenigstens 20 % größer ist als die Fläche des erwärmbaren Bereichs des Gehäusebodens **(1e)** und die Hitzeschutzplatte **(5)** so ausgerichtet ist, daß der erwärmbare Bereich des Gehäusebodens **(1e)** allseitig gleichmäßig abgedeckt ist,
- zwischen den senkrechten Gehäusewänden und den Seitenkanten der Elektroden sind zwei Platten **(6a, 6b)** angeordnet, deren oberer Bereich als Schöpftrichter **(7a, 7b)** ausgebildet ist, wobei die Oberkante des Schöpftrichters **(7a, 7b)** einige Millimeter über dem Elektrolytpegel **(3a)** hinaus ragt, so daß bei einer fahrzeugtypischen Bewegung der Batterie der Elektrolyt **(3)** in die Schöpftrichter **(6a, 6b)** schwappt.

2. Batterie nach Anspruch 1, **dadurch gekennzeichnet, daß** die Hitzeschutzplatte **(5)** Löcher **(8)** aufweist.

## Claims

1. Electrolytic battery with dynamic intermixing and overheating protection, which comprises:
- a case **(1)** having a bottom **(1e),**
- electrodes **(2)** vertically arranged in the case **(1),**
- a liquid electrolyte **(3)** and
- a heater **(4)** arranged at the bottom **(1e)** of battery case,
**characterized in that**
- the heater **(4)** is configured so that
- maximum 60 % of the area of the bottom **(1e)** are heatable and
- the heatable area of the bottom **(1e)** extends centrally and at right angles to all of the plate-shaped electrodes **(2),**
- an intermixing device having an overheating protector is arranged in the battery case, which comprises the following features:
- a heat protecting plate **(5)** is arranged between the bottom **(1e)** of battery case and the lower edge **(2a)** of each of the electrodes, wherein the area of the heat protecting plate **(5)** is greater than the area of the heatable area of the bottom **(1e)** by at least 20 % and the heat protecting plate **(5)** is aligned so as to cover the heatable area of the bottom **(1e)** symmetrically at all sides,
- one plate is arranged between the vertical wall and the lateral edge of each of the electrodes, at both broadsides of the battery case, wherein the upper portion thereof is shaped so as to form a funnel **(7a, 7b)** and the upper edge of the funnel **(7a, 7b)** stands out from the level of electrolyte **(3a)** by some millimeters so that some of the electrolyte **(3)** swashes into the funnels **(7a, 7b)** when the car performs typical movements.

2. Battery according to claim 1, **characterized in that** the heat protecting plate **(5)** comprises holes **(8).**

## Revendications

1. Batterie à l'électrolyte liquide à mélange dynamique et protection contre la surchauffe, laquelle présente
- Un boîtier (1) avec un fond de boîtier (1e)
- Des électrodes (2) qui sont disposées à la verticale dans le boîtier (1)
- Un électrolyte liquide (3) et Un chauffage (4) disposé sur le fond du boîtier (1e)
**Caractérisé en ce que**
- Le chauffage (4) est conçu de telle sorte que
- La zone du fond de boîtier (1e) pouvant être chauffée représente au maximum 60% de la surface du fond de boîtier (1e) et que
- La zone du fond de boîtier (1e) pouvant être chauffée s'étende à angle droit et au centre au-dessus de toutes les plaques d'électrodes (2),
- Un dispositif de mélange à protection contre la surchauffe disposé dans le boîtier de batterie selon les caractéristiques suivantes :
- Entre le fond de boîtier (1e) et l'angle inférieur (2a) des électrodes (2) est disposée une plaque de protection thermique (5), sachant que la surface de la plaque de protection thermique (5) est au moins de 20% supérieur à la surface de la zone du fond de boîtier (1e) pouvant être chauffée et que la plaque de protection thermique (5) est positionnée de telle sorte que la zone du fond de boîtier (1e) pouvant être chauffée est recouverte de façon identique de tous les côtés.
- Entre les parois verticales du boîtier et les angles latéraux des électrodes sont disposées deux plaques (6a, 6b) dont la zone supérieure forme un cône de puisage (7a, 7b), sachant que l'angle supérieur du cône de puisage (7a, 7b) est plus haut que le niveau d'électrolyte (3a) de quelques millimètres, de telle sorte que lors d'un mouvement de la batterie typique sur un véhicule, l'électrolyte (3) déborde dans le cône de puisage (6a, 6b).

2. Batterie selon la revendication 1, **caractérisé en ce que** la plaque de protection thermique (5) présente des trous (8).
